# DEMANDE DE BREVET EUROPEEN

(11) **EP 4 438 448 A1**
(43) Date de publication de la demande: **02.10.2024**
(21) Numéro de dépôt: 23165023.5
(22) Date de dépôt: 29.03.2023
(51) Int. Cl.: B62D 63/06, B60P 1/64, B60P 3/42

(54) **DISPOSITIF DE REMORQUE MODULAIRE**

(71) Demandeur: Walrant, Frédéric, 5300 Andenne (BE)
(72) Inventeur: Walrant, Frédéric, 5300 Andenne (BE)
(74) Mandataire: AWA Benelux

(57) **Abrégé**

La présente invention concerne un dispositif de remorque modulaire destiné à déposer ou interchanger des carrosseries de différents types et de dimensions variables de manière simple et rapide comprenant;
- un chariot (1) comprenant au moins un essieu fixé sur un support comprenant plus de deux point d'appuis et d'au moins une clame de verrouillage afin d'y déposer et d'y verrouiller de façon démontable une carrosserie (2),
- la carrosserie (2) comprend un châssis (5) posé et verrouillé sur le chariot (1),
- un timon (3) comprenant au moins un axe de fixation (34) pouvant être fixé soit sur le chariot (1), soit sur le châssis (5) de la carrosserie (2),
- un pare-chocs (4) arrière qui pouvant être fixé soit sur le chariot (1), soit sur la carrosserie (2).

## Description

### Domaine technique

La présente invention concerne un dispositif de remorque modulaire, plus particulièrement un dispositif de remorque destiné à déposer ou d'interchanger tous types de carrosseries de dimensions et de fonctionnalités diverses et d'usage différents de manière simple et rapide.

### État de la technique

Les dispositif de remorques sont utilisées depuis des siècles. Ils existaient au début sous forme de véhicules non motorisés tractés par des moyens non motorisés tels que les êtres humains et les animaux. Plus tard, des véhicules motorisés ont été utilisés pour les remorquer. Les dispositif de remorques sont généralement utilisés pour le transport de marchandises et de matériaux.

Un dispositif de remorque peut être affecté à des tâches diverses et variées comme une benne, un container, un porte conteneur, une bétaillère, une citerne, un plateau un fourgon, un cadre support, une remorque a châssis extensible, une remorque publicitaire. Il est également possible d'adapter différents types de carrosserie à un dispositif de remorque pour effectuer des tâches ou travaux spéciaux.

Cependant, l'utilisation d'un même dispositif de remorque pour plus d'une fonctionnalité ou application reste limitée. Plus précisément, les nombreuses règlementations gouvernementales relatives à l'utilisation de ces dispositifs sur les routes publiques ne laissent pratiquement aucune flexibilité pour utiliser le même dispositif de remorque à des usages multiples.

L'achat de plus d'un dispositif complet de remorque pour chaque application est l'une des solutions limitées qui n'est pas la plus pratique en termes de coût et de stockage.

De plus, travailler en alternance n'est pas possible avec les dispositifs de remorques existants. Il est toujours nécessaire de décharger le dispositif de remorque de sa charge pour l'utiliser pour une autre application ou une autre opération. Cela peut prendre du temps et n'est pas très pratique avec des effectifs limités. En outre, le stockage de la charge nécessite un stockage de l'ensemble de la remorque ce qui limite l'utilisation de la remorque.

Toute solution possible pour attacher et adapter la carrosserie à la remorque entrainera un poids supplémentaire et donc moins de charge à transporter et plus de coûts.

Il est donc intéressant de proposer des alternatives pour réaliser des dispositifs de remorques à usage multiple offrant plus de flexibilité et pouvant s'adapter facilement et parfaitement à l'usage souhaité sans ajouter de poids et de coûts.

### Résumé de l'invention

La présente invention se rapporte à un dispositif de remorque modulaire telle que décrite dans les revendications annexées.

La présente invention concerne un dispositif de remorque modulaire destiné à déposer ou interchanger des carrosseries de différents types et de dimensions variables de manière simple et rapide comprenant :
- un chariot comprenant au moins un essieu fixé sur un support comprenant plus de deux point d'appuis et d'au moins une clame de verrouillage afin d'y déposer et d'y verrouiller de façon démontable une carrosserie,
- la carrosserie comprend un châssis posé et verrouillé sur le chariot,
- un timon comprenant au moins un axe de fixation pouvant être fixé soit sur le chariot, soit sur le châssis de la carrosserie,
- un pare-chocs arrière qui pouvant être fixé soit sur le chariot, soit sur la carrosserie.

Selon des modes de réalisation préférés de l'invention, le dispositif de remorque modulaire comprenant une ou une combinaison appropriée de plusieurs des caractéristiques suivantes :
- des béquilles repliables permettent de soulever la carrosserie afin de libérer le chariot ;
- au moins une barre de manipulation situées à l'un des côtés du chariot permet de déplacer le chariot en dessous de la carrosserie lorsque celle-ci est soulevée sur ses béquilles ;
- des allonges sur glissières permettent d'acheminer les signaux électriques du timon vers le pare-chocs arrière et de lier le timon et le pare-chocs au chariot ;
- le timon est totalement et facilement démontable et assemblé sur une barre de force ;
- le timon peut être muni d'une roue d'appui et de feux de signalisation pour l'avant de la carrosserie ;
- le pare-chocs est assemblé sur un profilé permet de réunir les feux de signalisation, la plaque d'immatriculation, et son éclairage ;
- des axes de fixation permettent de fixer le pare-chocs sur le chariot ou sur la carrosserie.

La présente invention concerne un dispositif de remorque modulaire qui peut transporter tous types de carrosserie de dimensions et de fonctionnalités diverses et d'usage différents qui possèdent chacune leurs propres châssis autoporteurs.

### Brève description des figures

La figure 1 est une vue en perspective d'un dispositif classique de remorque selon l'état de la technique.
La figure 2 est une vue en perspective d'un exemple de dispositif de remorque selon l'invention.
La figure 3 est une vue en plan éclatée des quatre ensembles tel que représentés sur la figure 2.
La figure 4.1 est une vue en perspective de dessous de l'ensemble chariot, l'ensemble timon, et l'ensemble pare-chocs, représentés sur la figure 2.
La figure 4.2 est une vue en perspective de dessus de l'ensemble chariot, l'ensemble timon, et l'ensemble pare-chocs, représentés sur la figure 2.
La figure 5 est une vue en perspective de l'ensemble carrosserie type « benne », représenté sur la figure 2.
La figure 6 est une vue en perspective de l'ensemble timon, représenté sur la figure 2.
La figure 7 est une vue en perspective de l'ensemble pare-chocs, représenté en figure 2.
La figure 8 est une vue en perspective éclatée des quatre éléments principaux représentés sur la figure 2.
La figure 9 est une vue en perspective détaillée de la fixation du timon sur la carrosserie représentée sur la figure 2.
La figure 10 est une vue en perspective détaillée de la fixation du pare-chocs sur la carrosserie représentée sur la figure 2.

### Description détaillée de l'invention

Le type de remorque selon l'invention est destiné à être attaché à l'arrière de tout véhicule transportable ou portable avec ou sans moteur pour transporter toutes sortes d'objets, de matériaux, d'éléments, ou de produits. La remorque de la présente invention est adaptable à n'importe quel système d'attelage qui permet un attachement robuste et sécurisé. Elle comporte quatre ensembles principaux : un chariot, une carrosserie, un timon et un pare-chocs. La remorque peut être adaptée à une multitude d'usages. Elle peut être utilisée comme plateau, benne, container ou encore pour des applications plus spécifiques. Ses dimensions sont également parfaitement adaptées à l'usage souhaité. La carrosserie peut être déposée avec son chargement et interchangée avec une autre carrosserie, permettant de déplacer et de stocker le chargement, ou de travailler en alternance. Même si la carrosserie est déposable, son châssis et celui de la remorque sont un seul et unique châssis. Cela permet d'alléger considérablement le véhicule.

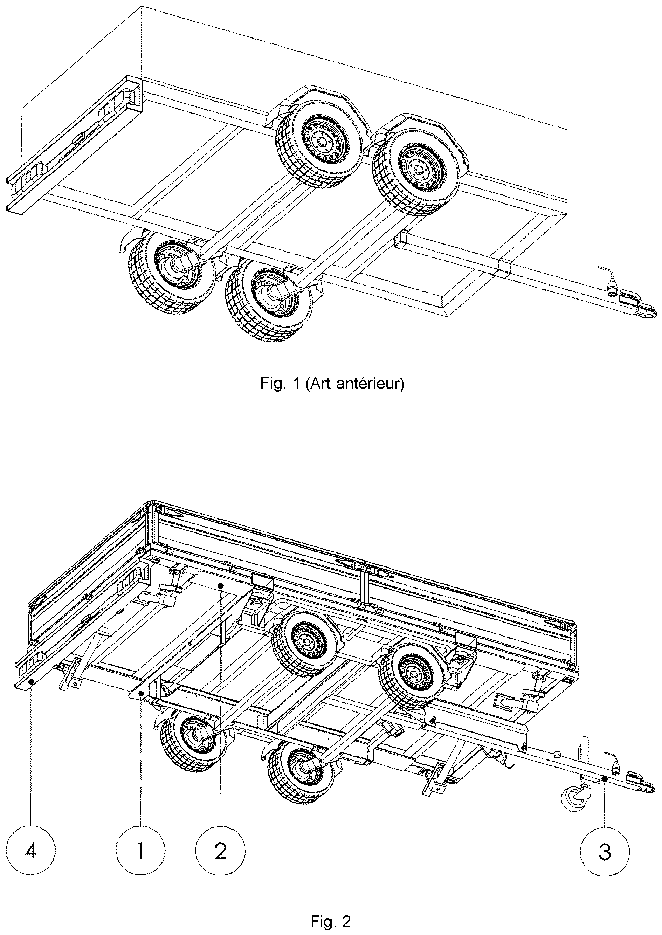

La figure 1 illustre un dispositif de remorque classique à essieu central selon l'état de la technique. Ce dispositif de remorque classique comprend principalement un châssis, un ou plusieurs essieux, un plancher, une carrosserie, un timon, une fiche électrique, et un pare-chocs arrière avec les feux de signalisation. Le timon est fixé soit sur l'essieu, soit sur le châssis. La carrosserie peut être une benne, un container, ou un cadre support pour différents éléments. La carrosserie peut également être déposable, dans ce cas le plancher fait office de plateau. Dans tous les cas, les dimensions du châssis et de la carrosserie sont intrinsèquement liées.

De plus, si la carrosserie est déposable, par exemple, comme dans le cas d'un container, celle-ci doit être elle-même construite sur un châssis rendant l'ensemble du dispositif relativement lourd, ce qui n'est pas souhaitable pour ce type de véhicule.

La figure 2 présente une vue en perspective d'un exemple de dispositif de remorque selon l'invention. La remorque comprend un chariot 1, une carrosserie 2, un timon 3, et un pare-chocs 4. La carrosserie 2 dans cette réalisation préférée est de type benne mais elle peut aussi comprendre un container, un plateau, un support, une caravane, ou n'importe quel autre type de carrosserie qui peut servir à une application spécifique.

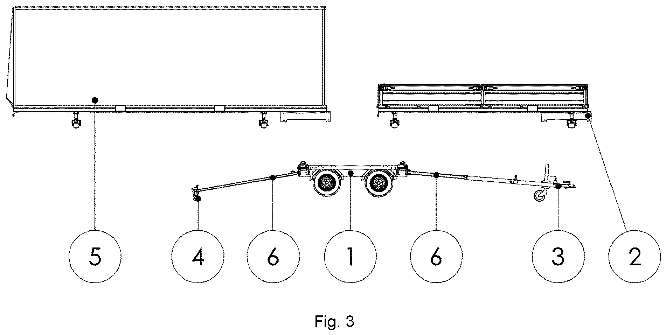

La figure 3 illustre les ensembles principaux de la remorque. Deux carrosseries présentées sont de type "container" 5 et de type "benne" 2. Le chariot 1 est fabriqué pour transporter tous types de carrosserie de type container ou benne ou autres types, pour autant que la carrosserie représentée dans la figure 2 respecte l'empattement de fixation chariot 1 et la charge maximale que celui-ci peut supporter. Les dimensions, fonctionnalités et formes ne sont pas limitées et pourront être différentes.

La carrosserie 2 possède de préférence son propre châssis qui peut être fixé sur le chariot 1. Ledit châssis est prévu pour recevoir le timon 3 et le pare-chocs 4. Des allonges sur glissières 6 permettent d'acheminer les signaux électriques du timon 3 vers le pare-chocs arrière 4.

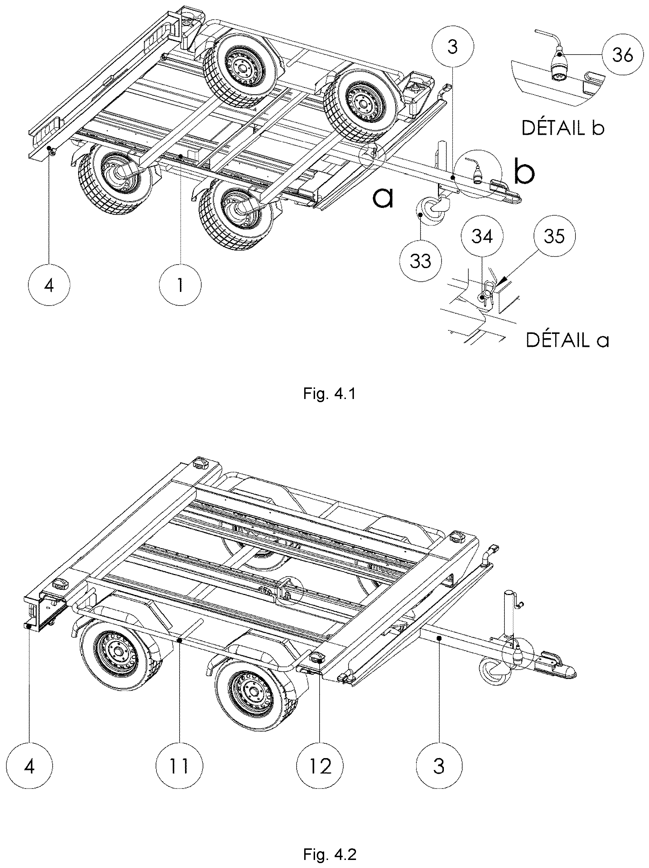

La figure 4 illustre l'ensemble chariot 1 qui montre le timon 3 qui peut être muni d'une roue d'appui 33 mais plus d'une roue d'appui peut également être utilisée. Ce timon 3 peut être fixe soit sur le charriot 1, soit sur le châssis de la carrosserie 2. Des barres de manipulation 11 située à gauche et à droite du chariot 1. Ces barres de manipulation 11 peuvent également être situées sur n'importe quel côté latéral du chariot 1 pour permettre de déplacer ledit chariot 1 en dessous de la carrosserie 2. Le pare-chocs 4 peut être fixe soit sur le chariot 1, soit sur le châssis de la carrosserie 2.

En référence à la figure 4.1, les détails (a) et (b) de la figure 3 montrent un système de fixation d'un axe de fixation 34, de sa goupille 35 et d'une prise électrique 36 respectivement. L'axe de fixation 34 et sa goupille 35 permettent de lier le timon 3 à la structure du chariot 1. La prise électrique 36 alimente les composants et signaux électriques en électricité via la source électrique du véhicule.

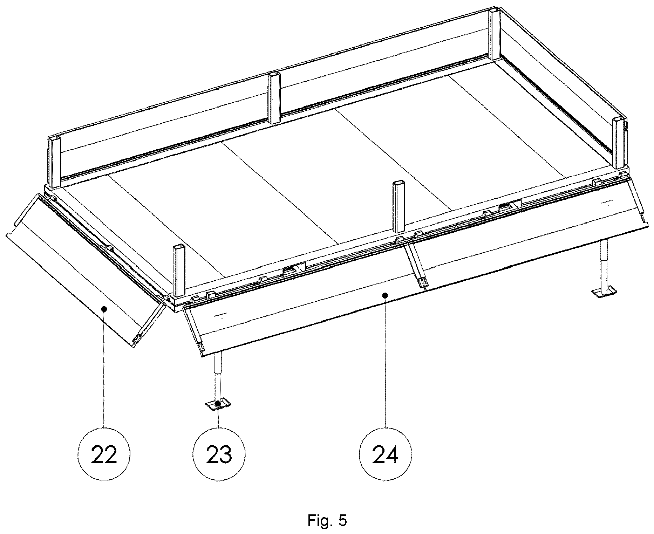

La figure 5 illustre l'ensemble carrosserie 2 type benne, le mode de réalisation préféré, mais les spécifications peuvent être également valables pour tous autres types de carrosseries. La carrosserie peut comprendre un plancher composé d'un seul module ou de plusieurs sections. Selon l'application, le plancher peut être continu ou discontinu de façon segmentées. Sur les côtés latéraux, des plaques latérales peuvent être installés de manière fixe ou amovibles, détachables, semi-détachables, ou bien entièrement fixées soit au plancher, soit au châssis, soit aux barres horizontales existant sur les côtés de la carrosserie. Pour faciliter le chargement et le déchargement de tout type de charge, les plaques latérales sont de préférence rotatives autour d'un axe horizontal par rapport au bord latéral du plancher par au moins un axe de sort que l'utilisateur peut ouvrir au moins un côté latéral pour changer plus de charge dans le sens vertical sans risque d'écrasement pendant le chargement ou pendant n'importe quel fonctionnement de la carrosserie. Un ou plusieurs côtés latéraux peuvent rester ouverts pour s'adapter aux articles longs à transporter. Les barres horizontales peuvent être montées sur le plancher ou directement sur le châssis afin de soutenir les plaques latérales, d'assurer une fixation robuste, ou simplement utilisées pour baliser la charge transportée.

Dans le schéma illustré sur la figure 5, des béquilles 23 sont présentes pour permettre de soulever la carrosserie 2 afin de libérer le chariot 1. De préférence, au moins trois béquilles sont utilisées, mais plus préférablement quatre, une à chaque coin de la carrosserie, pour une meilleure stabilité. Ces béquilles 23 peuvent être fixées au châssis, au plancher, ou aux barres horizontales, mais elles peuvent aussi être séparées de la carrosserie et montées au besoin pour alléger le poids de la remorque. De préférence, les béquilles 23 sont repliables et ont une hauteur réglable. Plus précisément, les béquilles 23 peuvent être pliées pendant le transport et dépliées lorsque par exemple la carrosserie doit être soulevée ou interchangée avec une autre carrosserie, permettant de déplacer et de stocker le chargement, ou de travailler en alternance. La hauteur réglable des béquilles 23 peut permettre un levage stable de la carrosserie indépendamment de la planéité du sol de travail.

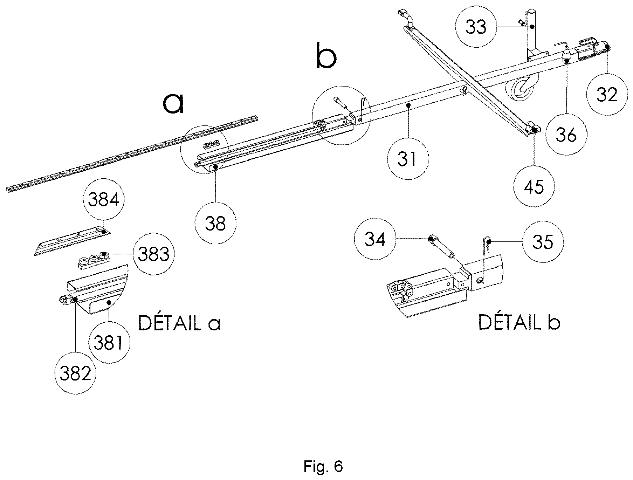

La figure 6 représente l'ensemble du timon 3 avec un agrandi des détails (a) et (b). Le détail (a) représente l'ensemble de liaison 38. Il est composé d'une barre de liaison 381 dans laquelle se déplace une chaine porte-câble 382. L'ensemble de liaison 38 coulisse sur le chariot 1 grâce à un patin 383 et une glissière 384. La fonction de cet ensemble de liaison 38 est de solidariser le chariot 1 au timon 3, il n'est d'usage pas démontable du chariot 1, ni du timon 3. L'ensemble de liaison 38 n'a cependant aucun rôle dans la prise de force.

Le bras de force 31 sera fixé à l'aide des axes de fixation 34 et de leurs goupilles respectives 35 sur le chariot 1 ou sur la carrosserie 2 (ou 5). Un autre système de damage est envisageable, tant qu'il respecte le principe général de « fixation principale » inhérent à la « prise de force ».

Le timon 3 peut également être muni de feux de signalisation 45 pour l'arrière, les côtés, ou l'avant de la carrosserie 2. Une roue d'appui 33 est de préférence fixée à l'avant de la barre de force du timon 3 et peut être pliable ou réglable en hauteur. Par exemple, un système de manivelle peut être utilisé pour régler ou ajuster la hauteur souhaitée de la roue d'appui 33 mais d'autres systèmes mécaniques ou électromécaniques, manuelle ou automatique, pourraient également être utilisés. Il est important de mentionner que le timon 3 peut être attaché à n'importe quel type de véhicule par une tête d'attelage 32 ou d'autres systèmes d'attelage si le véhicule n'est pas équipé d'une boule ou rotule ou tête d'attelage.

Le système de l'attelage 32 permet de faciliter la manoeuvre du chariot. Il permet notamment à l'ensemble du dispositif de remorque de pivoter lorsque le véhicule tourne sans aucun risque que l'arrière du véhicule percute la carrosserie 2 ou le chariot 1.

Le timon 3 est de préférence totalement et facilement démontable à l'aide, par exemple de plusieurs axes de fixation 34, et goupilles 35. Les axes de fixation 34 et les goupilles 35 peuvent être modifiés par un système de montage et démontage plus simple et plus rapide pour autant que cela garantisse une fixation sûre et fiable du timon 3. Des systèmes de type clic clac pourraient également être utilisés.

De plus, le timon 3 peut comprendre une chaine porte câble 382, de préférence plus d'une chaine porte câble, pour faire passer les signaux électriques des feux de signalisation 45 ou d'autres composants électriques par des câbles.

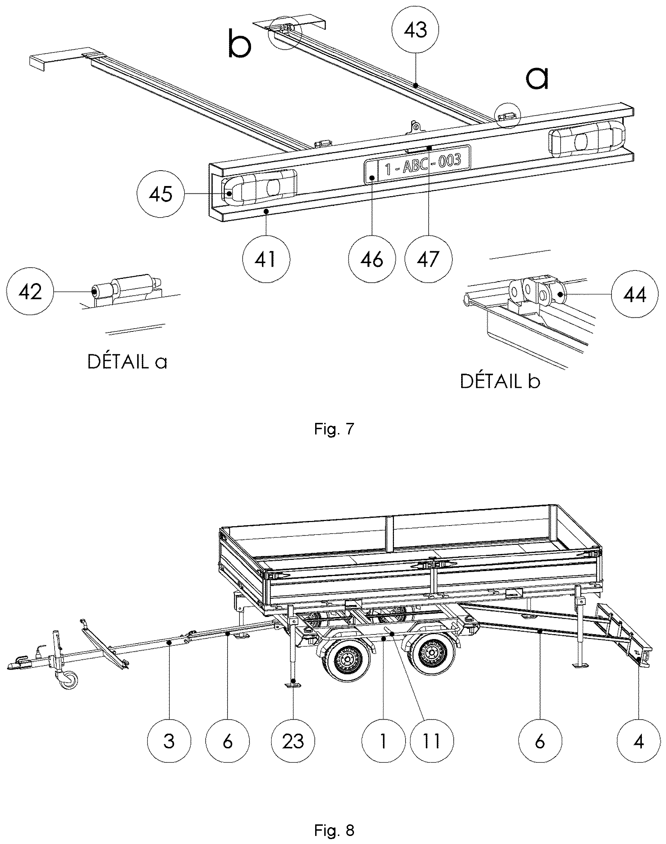

La figure 7 illustre l'ensemble du pare-chocs 4 et des détails (a) et (b) supplémentaires montrant les axes de fixation 42 permettent de fixer le pare-chocs 4 sur le chariot 1 ou sur la carrosserie 2, et la chaine porte câble 44 qui permet l'acheminement des signaux électriques du timon 3 vers le pare-chocs 4 respectivement. Il est préférable d'avoir plus d'un axe de fixation 42, plus préférablement au moins deux. Le pare-chocs 4 est assemblé sur un profilé 41, la pièce maitresse de cet ensemble pare-chocs 4. Le profilé 41 permet de réunir les feux de signalisation 45, la plaque d'immatriculation 46 et son éclairage 47.

Selon la figure 7, le pare-chocs 4 regroupe tous les feux de signalisation arrière en accord avec la règlementation routière internationale. Le pare-chocs 4 peut également être fixe soit sur le chariot 1, soit sur le châssis de la carrosserie 2.

L'ensemble du pare-chocs 4 peut avoir lui-même un système d'attelage permettant d'attacher ou d'accoupler un dispositif de remorque supplémentaire. Ce système supplémentaire d'attelage peut être attaché ou couplé au timon ou au chariot ou au châssis de la carrosserie 2.

La figure 8 représente la pose de l'ensemble carrosserie 2 type benne sur l'ensemble chariot 1. La carrosserie 2 représentée sur la figure 8 est en position relevée sur ses béquilles 23 tandis que le chariot 1 est en position sous la carrosserie 2 pour soit assembler ou désassembler les deux ensembles. Le timon 3 est le pare-chocs 4 peuvent être fixés soit sur le chariot 1, soit sur la carrosserie 2, ce qui permet une configuration "avec carrosserie" et une configuration "sans carrosserie".

Dans le cas de la configuration "avec carrosserie", la carrosserie 2 est posée sur le chariot 1 après avoir déplacé le chariot 1 sous la carrosserie 2 à l'aide des barres de manipulation 11 situées à au moins un côté du chariot 1. La carrosserie 2 est avantageusement dans ce cas en position soulevée sur ses béquilles 23. Lorsque la carrosserie est bien positionnée au-dessus du chariot 1, elle est posée et clamée sur le chariot 1. Comme la carrosserie 2 est autoporteuse, autrement dit, elle est construite sur son propre châssis, ce châssis devient le châssis de la remorque. L'ensemble carrosserie 2 et l'ensemble chariot 1 peuvent être verrouiller par des axes de fixations et goupilles ou par des autres systèmes de verrouillage rapide et fiable. Plus précisément, le timon 3 est escamoté jusqu'à la position de fixation grâce à ses glissières 6 et fixé sur le châssis de la carrosserie 2. En outre, et de manière similaire, le pare-chocs 4 est aussi escamoté jusqu'à la position de fixation grâce à ses glissières 6 et fixé sur le châssis de la carrosserie 2.

Dans le cas de la configuration "sans carrosserie", le timon 3 et le pare-chocs peuvent être complètement escamotés (figure 4) ou partiellement escamotés. Dans ce cas, la fixation du timon 3 et du pare-chocs 4 est effectuée sur le chariot 1 par des axes de fixations et goupilles ou par des autres systèmes de verrouillage rapide et fiable.

Le fait de disposer d'un timon 3 et/ou d'un pare-chocs escamotables donnent l'avantage de déposer plus d'un type et de plus d'une taille de carrosserie 2. Ajoutant plus d'une position de fixation dans les glissières 6 des pare-chocs 4 et du timon 3 offre plus de flexibilité pour adapter le chariot pour accueillir n'importe quelle longueur de carrosserie 2. De plus et plus généralement, un système de fixation avec rainure ou un autre système qui peut offrir des positions de fixation multiples (continues) permet au chariot 1 de soutenir n'importe quelle longueur ou taille de carrosserie 2.

Le poids de la remorque n'est pas seulement important pour faciliter une manipulation plus facile mais aussi pour la consommation d'énergie et donc l'émission de CO₂. En outre, toute économie du poids du dispositif de remorque entraînera une diminution du coût du transport. Puisque la carrosserie 2 est autoporteuse ou plus précisément possède son propre châssis, il n'est pas nécessaire que le chariot 1 dispose d'un autre châssis. Le dispositif de remorque ne possède donc de préférence qu'un seul et unique châssis. Cela conduit à un allègement considérable du véhicule.

Dans le mode de réalisation préféré de la présente invention, quatre roues sont préférées mais d'autres possibilités sont réalisables. Le dispositif de remorque nécessite au moins deux roues montées rotatives autour d'un axe transversal dont la position est fixe par rapport au chariot. Par contre, plus de deux roues, voir plus de quatre roues peuvent être utilisées si le dispositif de remorque doit porter une carrosserie relativement longue ou une charge lourde. La distance entre les roues peut être ajustée en fonction de la dispersion de la charge.

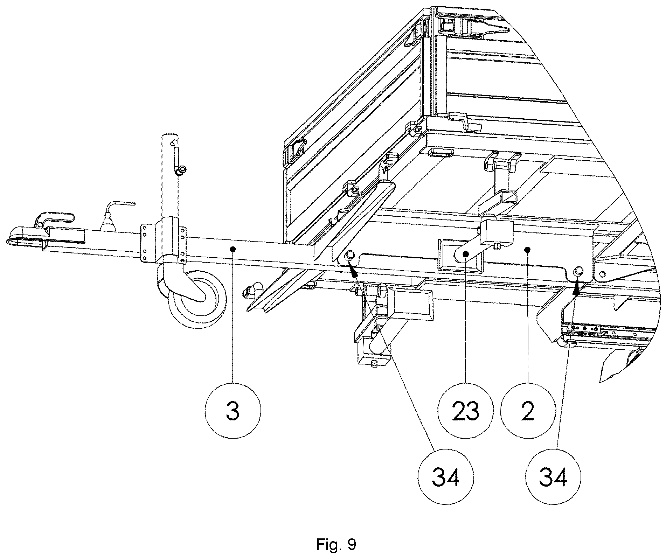

La figure 9 illustre la fixation de l'ensemble timon sur l'ensemble carrosserie. Comme la carrosserie 2 est assemblée sur son propre châssis, le châssis peut être posé et clamé sur le timon 3. Plus précisément, sur l'un ou plusieurs essieux du timon 3. Les types de systèmes de verrouillage tels que les axes 34 et les goupilles 35 (figure 6, détail (b)) pourraient être utilisés mais d'autres systèmes de verrouillage, par exemple de type `twist lock' ou d'autres systèmes de verrouillage permettant un montage ou démontage simple et rapide de la carrosserie 2 de manière fiable et sécurisée pourraient également être employés. De plus, il pourrait être apprécié que le système de verrouillage assure ces objectifs sans que l'utilisateur ait besoin de se déplacer sous la carrosserie 2 ou de se pencher pour manipuler le système de verrouillage et la fixation de l'ensemble timon sur l'ensemble carrosserie.

Les béquilles 23 peuvent être pliables pour être utilisées quand cela est nécessaire. En d'autres termes, les béquilles 23 peut être pliées lorsque la carrosserie 2 doit être déplacée ou transportée par le véhicule et dépliées lorsque la carrosserie 2 doit être soulevée pour toute raison. Les béquilles 23 peuvent également être munies d'un système de réglage de leur hauteur pour modifier la hauteur de chaque béquille séparément si le plan sur lequel la carrosserie est déposée n'est pas plat ou présente des niveaux différents. En outre, les béquilles 23 peuvent être détachables de la carrosserie 2 de sorte qu'elles peuvent être détachées au lieu d'être dépliées lorsqu'elles ne sont pas nécessaires pour alléger la remorque et économiser du poids.

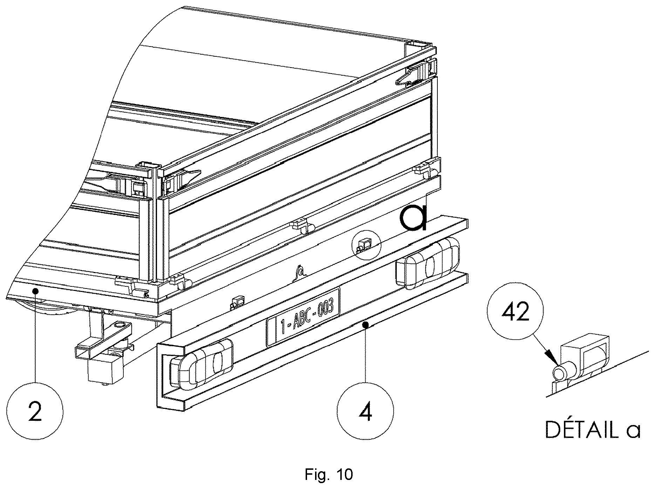

La figure 10 montre la fixation de l'ensemble pare-chocs sur l'ensemble carrosserie. Le détail (a) de la figure 9 montre spécifiquement un axe de fixation 42 utilisé pour fixer le pare-chocs 4 avec la carrosserie 2. Plus d'un axe de fixation peut être utilisé mais de préférence au moins deux axes de fixation sont recommandés pour assurer une fixation sûre et robuste. Autres systèmes de fixation peuvent être employés pour assurer le même objectif.

## Revendications

1. Un dispositif de remorque modulaire destiné à déposer ou interchanger des carrosseries de différents types et de dimensions variables de manière simple et rapide comprenant;
- un chariot (1) comprenant au moins un essieu fixé sur un support comprenant plus de deux point d'appuis et d'au moins une clame de verrouillage afin d'y déposer et d'y verrouiller de façon démontable une carrosserie (2),
- la carrosserie (2) comprend un châssis (5) posé et verrouillé sur le chariot (1),
- un timon (3) comprenant au moins un axe de fixation (34) pouvant être fixé soit sur le chariot (1), soit sur le châssis (5) de la carrosserie (2),
- un pare-chocs (4) arrière qui pouvant être fixé soit sur le chariot (1), soit sur la carrosserie (2).

2. Le dispositif de remorque modulaire selon la revendication 1, dans lequel des béquilles repliables (23) permettent de soulever la carrosserie (2) afin de libérer le chariot (1).

3. Le dispositif de remorque modulaire selon les revendications 1 ou 2, dans lequel au moins une barre de manipulation (11) situées à l'un des côtés du chariot (1) permet de déplacer le chariot (1) en dessous de la carrosserie (2) lorsque celle-ci est soulevée sur ses béquilles (23).

4. Le dispositif de remorque modulaire selon l'une quelconque des revendications précédentes, dans lequel des allonges sur glissières (6) permettent d'acheminer les signaux électriques du timon (3) vers le pare-chocs arrière (4) et de lier le timon (3) et le pare-chocs (4) au chariot (1).

5. Le dispositif de remorque modulaire selon l'une quelconque des revendications précédentes, dans lequel le timon (3) est totalement et facilement démontable et assemblé sur une barre de force (31).

6. Le dispositif de remorque modulaire selon l'une quelconque des revendications précédentes, dans lequel le timon (3) peut être muni d'une roue d'appui (33) et de feux de signalisation (37) pour l'avant de la carrosserie (2).

7. Le dispositif de remorque modulaire selon l'une quelconque des revendications précédentes, dans lequel le pare-chocs (4) est assemblé sur un profilé (41) permet de réunir les feux de signalisation (45), la plaque d'immatriculation (46), et son éclairage (47).

8. Le dispositif de remorque modulaire selon l'une quelconque des revendications précédentes, dans lequel des axes de fixation (42) permettent de fixer le pare-chocs (4) sur le chariot (1) ou sur la carrosserie (2).

9. Le dispositif de remorque modulaire selon l'une quelconque des revendications précédentes, dans lequel le dit dispositif peut transporter tous types de carrosserie de dimensions et de fonctionnalités diverses et d'usage différents qui possèdent chacune leurs propres châssis autoporteurs.
